# FASCICULE DE BREVET EUROPEEN

(11) **EP 3 326 263 B1**
(45) Date de publication et mention de la délivrance du brevet: **22.07.2020**
(21) Numéro de dépôt: 16741948.0
(22) Date de dépôt: 25.07.2016
(51) Int. Cl.: H02K 1/14, H02K 7/116

(54) **MOTOREDUCTEUR COMPACT**
KOMPAKTER GETRIEBEMOTOR
COMPACT MOTOREDUCER

(30) Priorité: 23.07.2015 FR 1557015
(43) Date de publication de la demande: 30.05.2018
(73) Titulaire: MMT SA, 6304 Zug (CH)
(72) Inventeur: BILLET, Lionel, 25410 Dannemarie sur Crete (FR); ANDRIEUX, Gaël, 2533 Evilard (CH)
(74) Mandataire: IP Trust
(86) Numéro de dépôt international: PCT/EP2016/067631
(87) Numéro de publication internationale: WO 2017/013266

(56) Documents cités:
- EP-A1- 1 194 999
- EP-A2- 0 371 690
- EP-A2- 1 244 200
- CN-U- 201 478 933
- CN-U- 201 536 314
- CN-Y- 2 335 297
- FR-A1- 2 919 441
- JP-U- S6 315 148
- US-B2- 8 403 376

## Description

### DOMAINE TECHNIQUE DE L'INVENTION

L'invention se rapporte au domaine des motoréducteurs comprenant un moteur électrique de type sans balai, associé à un train d'engrenages réducteur de vitesse. Plus particulièrement, elle se réfère à une solution très compacte utilisant l'association astucieuse d'un moteur électrique sans balais avec un train d'engrenages compact.

A titre d'exemples non limitatifs, l'invention se destine à être utilisée pour actionner des volets de vanne de thermorégulation automobile, ou encore pour actionner des ensembles de régulation de circulation de fluide (air, eau, carburant...).

### ETAT DE LA TECHNIQUE ANTERIEURE

Dans l'état de l'art, on connaît la demande de modèle d'utilité chinoise CN201478933 qui décrit un micromoteur à aimant permanent, comprenant un boîtier constitué d'une base et d'un couvercle formant une coque munie intérieurement d'un noyau en fer de stator en forme de Y. Le moteur comprend un rotor avec un aimant permanent, un arbre intermédiaire parallèle à l'arbre de rotor et un arbre de sortie avec une extrémité se prolongeant hors du boîtier. Le noyau de fer de stator présente trois dents avec un pas de dent de 60 degrés, avec deux dents longues entourées par une bobine et une dent courte au milieu.

On connaît aussi la demande de brevet européen EP1244200 décrivant un moteur pas à pas comprenant un rotor ayant une pluralité de pôles magnétiques le long de sa direction circonférentielle, une paire de culasses magnétiques agencée pour faire face aux pôles magnétiques du rotor, une paire de bobines d'excitation pour exciter la paire de culasses magnétiques, respectivement, en réponse à conduire des impulsions ayant la différence de phase, caractérisé en ce que: la base de stator est disposé à proximité du rotor, la paire de culasses magnétiques sont réglées sur la base de stator, de sorte que les chemins magnétiques peuvent être formées respectivement, et une paire de stator magnétique polaire des parties formés d'un seul tenant avec la base de stator forment les trajets magnétiques ainsi que les jougs magnétiques, respectivement.

La demande de modèle d'utilité chinois CN2335297 décrit un moteur électriques et qui est composé d'une partie d'entraînement, un élément d'orientation et une partie de réduction de vitesse. Les pièces polaires d'un stator de la partie d'entraînement sont conçues en arcs asymétriques circulaires, des rainures convexes et concaves des rainures, qui peuvent faire des espaces d'air non uniforme et peuvent changer magnétique condition de distribution du champ. La partie de l'orientation et la partie de réduction de vitesse ont l'avantage de la structure compacte et raisonnable. Le modèle d'utilité peut améliorer les performances de démarrage et le couple de sortie de moteurs miniatures, peut réduire le bruit et peut réduire le volume partiel supplémentaire.

Le document EP0371690 présente par exemple un mécanisme de transmission où l'ensemble mécanique de réduction est placé en bout de l'axe de sortie du moteur électrique.

Il est par ailleurs connu de réaliser des systèmes de réduction mécanique à engrenages compacts comme par exemple décrit dans le document DE4342185.

Il est encore connu, plus récemment, d'associer des moteurs électriques sans balai à de tels systèmes de réduction compact comme décrit par exemple dans le brevet US8403376.

Il est par ailleurs connu d'associer des moteurs sans balai à des systèmes de réduction compacte à engrenages droits comme décrit dans le brevet EP1194999.

Ces dispositifs de l'art antérieur ont pour objet de résoudre le problème général de disposer d'un ensemble de réduction mécanique relativement compact.

Cependant, ces dispositifs ne permettent pas d'obtenir une très bonne compacité de l'ensemble motoréducteur, ou une compacité suffisante, dans des applications spécifiques. Particulièrement, dans le cas de l'actionnement de volet de thermorégulation dans un véhicule automobile, le marché demande des ensembles motoréducteurs toujours plus nombreux et petits impliquant une empreinte réduite par rapport à l'état de l'art existant.

Ainsi, les solutions de l'état de l'art utilisant des réducteurs compacts présentant au moins deux ensembles pignons/roue dentée par axe porteur ne permettent pas de remplir les demandes imposées dans ce type d'applications où une meilleure intégration entre le moteur et le réducteur doit être réalisée, notamment en intégrant ces éléments dans un seul boitier relativement plat et étroit par rapport aux solutions existantes.

Les solutions intégrées ne présentes pas l'utilisation d'ensembles de réduction suffisamment compacts.

### EXPOSE DE L'INVENTION

La présente invention vise à pallier les inconvénients de l'état de la technique en proposant un motoréducteur associant de manière astucieuse un moteur électrique sans balai et un ensemble d'engrenages réducteur de mouvement.

Pour ce faire, la présente invention propose de renforcer la symbiose entre le moteur électrique sans balai et l'ensemble de réduction en plaçant le premier axe portant un premier ensemble pignon/roue dentée entre deux bobines électriques portées par le stator du moteur électrique. La roue dentée est ainsi disposée au plus proche de l'axe du moteur et l'ensemble motoréducteur formé est ainsi très compact et bien plus compact que les solutions de l'art antérieur, notamment en raison du regroupement sur un seul axe commun de deux ensembles de roue dentée/pignon. Une telle réalisation va à l'encontre de toutes les solutions proposées dans l'art antérieur.

Plus particulièrement l'invention propose un motoréducteur selon les revendications 1 et 2.

De ce fait, le motoréducteur est particulièrement compact avec des rapports de réduction type supérieurs à 1:200.

Dans un mode de réalisation, le moteur électrique est diphasé et comprend deux bobines dont les axes de bobinage sont espacés d'un angle voisin de 90°.

Dans un autre mode de réalisation le moteur électrique est triphasé et comprend trois bobines dont les axes de bobinage sont espacés d'un angle voisin de 120°.

Dans un autre mode de réalisation le moteur électrique est triphasé et il comprend trois bobines dont les axes de bobinage sont espacés d'un angle voisin de 60°.

Avantageusement, le premier axe porte deux ensembles roue dentée /pignon, les roues dentées de chaque ensemble étant disposées au-dessus des bobines.

Selon un mode particulier, le train d'engrenages présente au moins quatre étages de réduction, avec un deuxième axe supportant un deuxième et un troisième ensemble pignon/roue dentée, respectivement supérieur et inférieur, libres en rotation relative, ledit deuxième ensemble supérieur étant formé par une roue Re2h et un pignon Pe2h, ledit troisième ensemble inférieur étant formé par une roue Re2b et un pignon Pe2b, le train d'engrenages comprend un troisième axe supportant un quatrième ensemble formé par une roue Re3H et un pignon Pe3h et ladite roue Re2h engrenant avec le pignon Pe1 dudit premier ensemble, ledit pignon Pe2h engrenant avec ladite roue Re3h dudit quatrième ensemble, ledit pignon Pe3h engrenant la roue Re2b dudit troisième ensemble.

Selon un autre mode particulier le train d'engrenages présente au moins quatre étages de réduction, le premier axe comprend un deuxième ensemble pignon/roue dentée formé par une roue Re1b et un pignon Pe1b, le train d'engrenages comprend un deuxième axe supportant : un troisième ensemble formé par une roue Re2h et un pignon Pe2h et un quatrième ensemble formé par une roue Re2b et un pignon Pe2b, et ladite roue Re2h engrenant avec le pignon Pe1h dudit premier ensemble, ledit pignon Pe2h engrenant avec ladite roue Re1b dudit deuxième ensemble, ledit pignon Pe1b engrenant la roue Re2b dudit quatrième ensemble.

Dans une variante de réalisation ledit pignon Pe2b entraîne l'axe de sortie.

Dans un mode de réalisation, ledit troisième axe comprend en outre une roue Re3b entraînée par ledit pignon Pe2b, ladite roue Re3b entraînant une couronne dentée de sortie RDS entourant l'axe de sortie.

Dans un autre mode de réalisation ledit pignon Pe2b entraîne une couronne dentée de sortie RDS entourant l'axe de sortie.

Alternativement ladite couronne dentée de sortie RDS présente une ouverture traversant.

Avantageusement, chacun desdites ensembles roue dentée/pignon comprend une roue placée au-dessus du pignon.

Afin de réduire l'empreinte totale du motoréducteur, le premier axe est avantageusement placé en contact avec l'ensemble statorique sur son pourtour extérieur.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue schématique d'un premier exemple de réalisation de l'invention;
- les figures 2a et 2b, des vues respectivement de face et en perspective, d'un premier mode de réalisation suivant le premier exemple,
- les figures 3a et 3b, des vues respectivement de face et en perspective, d'un deuxième mode de réalisation suivant le premier exemple,
- la figure 4, une vue schématique d'un second exemple de réalisation de l'invention;
- les figures 5a et 5b, des vues respectivement de face et en perspective, d'un mode de réalisation suivant le second exemple,
- la figure 6 à 8 représentent des vues d'un troisième exemple de réalisation de l'invention;

### DESCRIPTION DETAILLEE D'UN MODE DE REALISATION

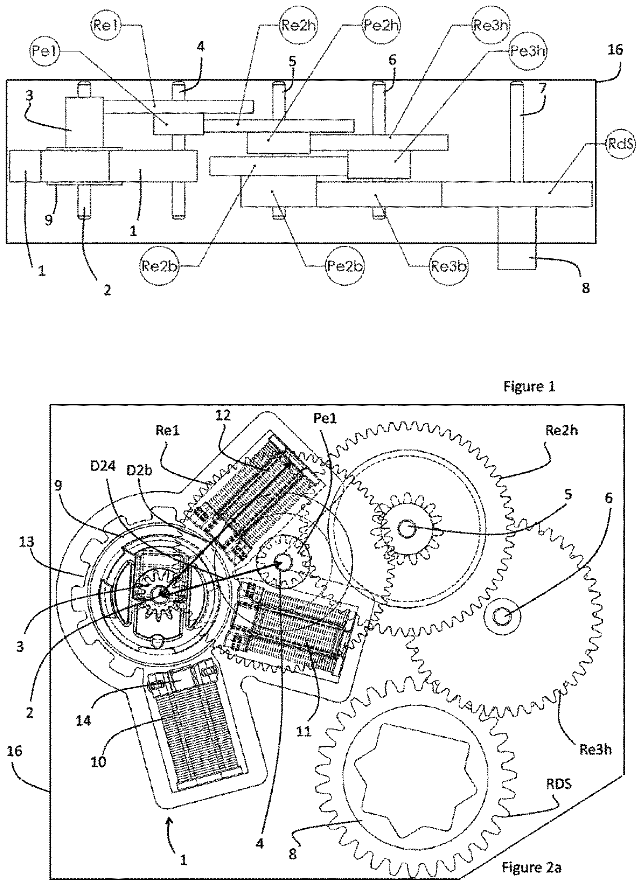

La figure 1 représente schématiquement un premier exemple typique de réalisation de l'invention. Le motoréducteur est composé d'un boitier (16) dans lequel on retrouve en entrée du motoréducteur un moteur électrique de type sans balai constitué d'un ensemble statorique (1) bobiné qui coopère magnétiquement avec un rotor (9) composé d'une ou plusieurs paires de pôles aimantés. Ce rotor (9) est guidé en rotation par un axe d'entrée (2) et est prolongé par un pignon d'entrée (3) qui engrène avec un train d'engrenages formant un réducteur mécanique de mouvement, réduisant la course mécanique et multipliant l'effort en sortie de ce train.

Ce train d'engrenages est composé de cinq ou six étages de réduction (en fonction de la liaison Re3b/RDS discuté ci-après) symbolisés par des ensembles de pignon/roue dentée portés par un premier (4), un deuxième (5), un troisième (6) axes fixes ainsi que par un axe de sortie (7). Tous les axes (4,5,6,7) de ce train d'engrenages sont parallèles entre eux et parallèles à l'axe d'entrée (2).

Le premier axe (4) porte une roue dentée Re1 accouplée à un pignon Pe1, ces deux éléments tournant autour du premier axe (4). La roue dentée Re1 engrène le pignon d'entrée denté (3), réalisant un premier étage de réduction. Avantageusement, le premier axe (4) traverse le volume dans lequel s'inscrit l'ensemble statorique (1) bobiné et le roue dentée Re1 est disposé au-dessus de l'ensemble statorique (1) bobiné.

Le deuxième axe (5) porte une roue dentée Re2h accouplée à un pignon Pe2h, ces deux éléments tournant autour du deuxième axe (5), ainsi qu'une roue dentée Re2b accouplée à un pignon Pe2b, ces deux éléments tournant aussi autour du deuxième axe (5). Le pignon Pe1 engrène avec la roue dentée Re2h, réalisant un deuxième étage de réduction.

Le troisième axe (6) porte une roue dentée Re3h accouplée à un pignon Pe3h, ces deux éléments tournant autour du troisième axe (6), ainsi qu'une roue dentée Re3b tournant aussi autour du troisième axe (6). La roue dentée Re3h engrène avec le pignon denté Pe2h, réalisant un troisième étage de réduction, la roue dentée Re2b engrène le pignon denté Pe3h, réalisant un quatrième étage de réduction, et la roue dentée Re3b engrène le pignon denté Pe2b, réalisant un cinquième étage de réduction.

L'axe de sortie (7) porte une roue de sortie dentée RDS tournant autour de l'axe de sortie (7). Un organe de liaison (8) permet d'accoupler la roue de sortie dentée RDS à un organe extérieur quelconque à déplacer (non montré). La roue dentée Re3b engrène avec la roue de sortie dentée RDS. A noter que cette dernière liaison d'engrenages peut aussi bien être selon un rapport de réduction unitaire que non unitaire. Cette liaison permet avantageusement de bénéficier d'une roue de sortie dentée RDS creuse pouvant plus facilement être connectée à un organe extérieur. La roue de sortie dentée RDS peut dépasser du boitier (16) ou l'affleurer, mais elle peut aussi être à l'intérieur du boitier (16). Dans ce dernier cas, l'organe extérieur à accoupler pénètre l'intérieur du boitier (16).

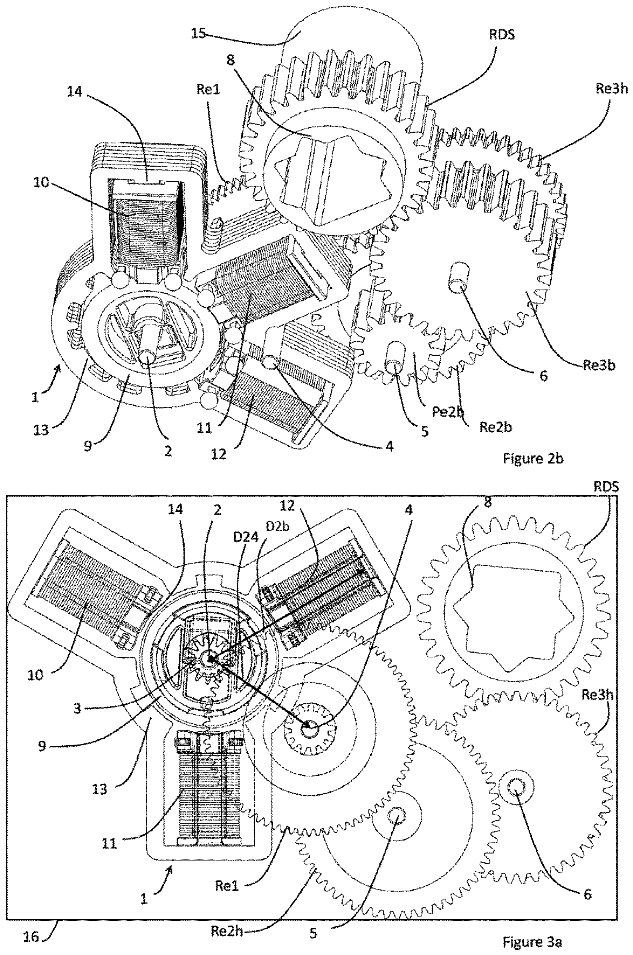

Les figures 2a et 2b représentent un premier mode de réalisation d'un motoréducteur selon le premier exemple. Il comprend l'utilisation d'un moteur électrique triphasé, présentant un ensemble statorique (1) composé d'un assemblage de tôles de matériaux ferromagnétique doux, par exemple en fer-silicium et de trois bobines électriques (10), (11) et (12) qui sont portées par des pôles, par exemple (14), de l'ensemble statorique (1) et dont les axes de bobinage sont espacés d'approximativement 60° les uns des autres. De cette façon, l'encombrement total du motoréducteur, qui peut s'inscrire dans un boitier (16) dont l'empreinte peut être apprécié en figure 2a, est minimisé car le train d'engrenages réducteur et les pôles bobinés sont du même côté entre l'axe (2) du rotor (9) et la roue de sortie RDS. Le boitier (16) recevant cet ensemble motoréducteur peut dont être d'une taille réduite par rapport à l'art antérieur.

Cet ensemble statorique (1) présente par ailleurs plusieurs pôles non bobinés, par exemple (13), servant à refermer le flux magnétique du circuit formé, et à gérer le couple de détente, comme enseigné par l'état de l'art en la matière. Ce moteur comprend aussi un rotor (9) présentant une bague aimantée, tournant autour de l'axe d'entrée (2).

Le premier axe (4) autour duquel tourne l'ensemble roue dentée Re1 et pignon Pe1, est placé entre les bobines (11) et (12), en contact avec l'ensemble statorique (1) sur le pourtour de l'ensemble statorique. Le contact n'est pas absolument nécessaire pour l'invention mais la compacité recherchée sera d'autant meilleure que le premier axe (4) est proche de l'axe d'entrée (2). On considère, au sens de l'invention, que le premier axe (4) est entre les bobines (11) et (12) lorsque ces bobines (11,12) sont écartées d'un angle mécanique inférieur ou égal à 180°, ici 60° environ et que la distance D24 de l'axe d'entrée (2) au premier axe (4) est inférieure à la distance D2b de l'axe d'entrée (2) à l'extrémité radiale des bobines (11, 12).

On retrouve ensuite l'ensemble des éléments décrits sur la figure 1 jusqu'à la roue de sortie RDS qui présente un organe de liaison (8) ayant une forme permettant l'accouplement à un organe extérieur non montré. Il est à noter que, dans cet exemple, la roue RDS n'est pas liée et guidée par un axe de sortie (7), contrairement à ce qui est présenté en figure 1, mais est guidée par la forme (15) donnée à la roue RDS d'un côté.

L'organe de liaison est avantageusement creux et traversant de sorte que l'accouplement avec l'organe extérieur à déplacer peut être monté indifféremment d'un côté ou de l'autre du motoréducteur. Ce montage réversible est notamment possible grâce à l'utilisation de la roue dentée Re3b qui engrène la roue dentée de sortie RDS selon un rapport de réduction unitaire ou proche de l'unité, permettant d'écarter la roue RDS des autres engrenages et permettant une connexion plus aisée de l'organe extérieur à connecter.

La compacité de la solution est donc assurée en premier lieu par l'espacement réduit entre l'axe (2) du rotor (9) et l'organe de liaison (8) en sortie grâce au placement judicieux du premier axe (4) entre les bobines à l'intérieur du volume dans lequel l'ensemble statorique s'inscrit. En deuxième lieu, la compacité est assurée par l'utilisation d'un ensemble de réduction par engrenages qui présentent au moins un axe portant deux ensembles pignon/roue dentée. Le rapport de réduction qu'il est possible d'atteindre est donc très important, typiquement plus de 1:450, dans un encombrement réduit.

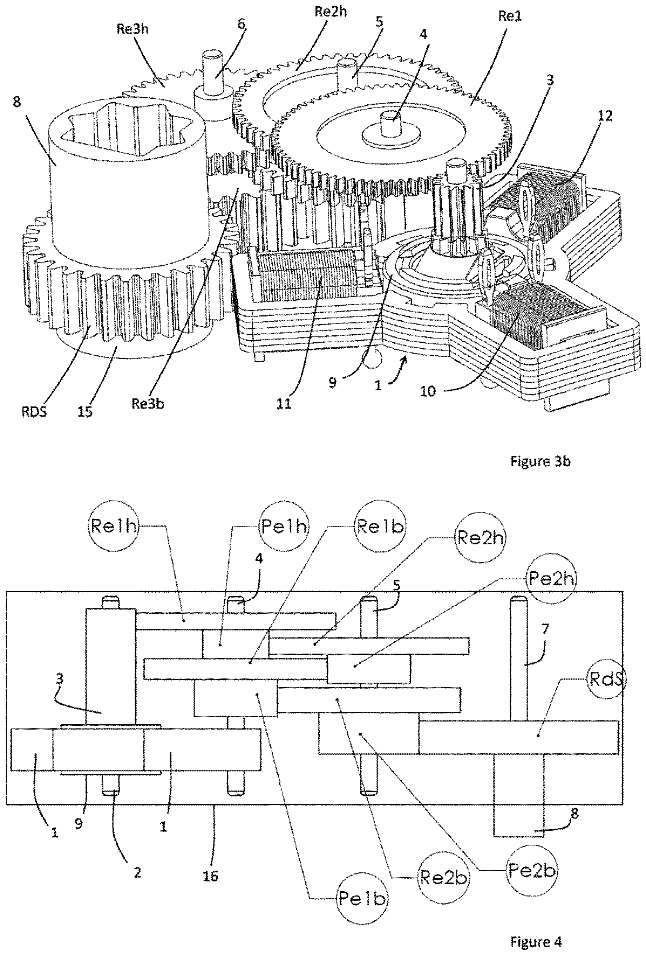

Les figures 3a et 3b représentent un deuxième mode de réalisation d'un motoréducteur selon le premier exemple. Il comprend l'utilisation d'un moteur électrique triphasé, présentant un ensemble statorique (1) composé d'un assemblage de tôles de matériaux ferromagnétique doux, par exemple en fer-silicium et de trois bobines électriques (10), (11) et (12) qui sont portés par des pôles, par exemple (14), de l'ensemble statorique (1) et qui sont répartis angulairement tous les 120°. Cet ensemble statorique (1) présente par ailleurs plusieurs pôles non bobinés, par exemple (13), servant à refermer le flux magnétique du circuit formé, et à gérer le couple de détente, comme enseigné par l'état de l'art en la matière. Ce moteur comprend aussi un rotor (9) présentant une bague aimantée, tournant autour de l'axe d'entrée (2).

Le premier axe (4) autour duquel tourne l'ensemble roue dentée Re1 et pignon Pe1, est placé entre les bobines (11) et (12), mais sans contact avec l'ensemble statorique (1). Le contact n'est pas absolument nécessaire pour l'invention mais la compacité recherchée sera d'autant meilleure que le premier axe (4) est proche de l'axe d'entrée (2). On considère, au sens de l'invention, que le premier axe (4) est entre les bobines (11) et (12) lorsque ces bobines (11,12) sont écartées d'un angle mécanique inférieur ou égal à 180°, ici 120° environ et que la distance D24 de l'axe d'entrée (2) au premier axe (4) est inférieure à la distance D2b de l'axe d'entrée (2) à l'extrémité radiale des bobines (11, 12).

On retrouve ensuite l'ensemble des éléments décrits sur la figure 1 jusqu'à la roue de sortie RDS qui présente un organe de liaison (8) ayant une forme permettant l'accouplement à un organe extérieur non montré. Il est à noter que, dans cet exemple comme dans celui des figures 2a et 2b, la roue RDS n'est pas liée et guidée par un axe de sortie (7), contrairement à ce qui est présenté en figure 1, mais est guidée par la forme (15) donnée à la roue RDS d'un côté.

L'organe de liaison est avantageusement creux et traversant de sorte que l'accouplement avec l'organe extérieur à déplacer peut être monté indifféremment d'un côté ou de l'autre du motoréducteur. Ce montage réversible est notamment possible grâce à l'utilisation de la roue dentée Re3b qui engrène la roue dentée de sortie RDS selon un rapport de réduction unitaire ou proche de l'unité, permettant d'écarter la roue RDS des autres engrenages et permettant une connexion plus aisée de l'organe extérieur à connecter.

La compacité de la solution est donc assurée en premier lieu par l'espacement réduit entre l'axe (2) du rotor (9) et l'organe de liaison (8) en sortie grâce au placement judicieux du premier axe (4) entre les bobines à l'intérieur du volume dans lequel l'ensemble statorique (1) s'inscrit. En deuxième lieu, la compacité est assurée par l'utilisation d'un ensemble de réduction par engrenages qui présentent au moins un axe portant deux ensembles pignon/roue dentée. Le rapport de réduction qu'il est possible d'atteindre est donc très important, typiquement plus de 1:450, dans un encombrement réduit.

La figure 4 représente schématiquement un deuxième exemple typique de réalisation de l'invention. On retrouve en entrée du motoréducteur un moteur électrique de type sans balai constitué d'un ensemble statorique (1) bobiné qui coopère magnétiquement avec un rotor (9) composé d'une ou plusieurs paires de pôles aimantés. Ce rotor (9) est porté par un axe d'entrée (2) et est prolongé par un pignon d'entrée (3) qui engrène avec un train d'engrenages formant un réducteur mécanique de mouvement, réduisant la course mécanique et multipliant l'effort en sortie de ce train.

A la différence du premier exemple, le train d'engrenages réducteur de mouvement est plus compact avec un axe porteur d'engrenages en moins. Ce train d'engrenages est composé de quatre ou cinq étages de réduction (en fonction de la nature de la liaison Pe2b/RDS discutée plus loin) symbolisés par des ensembles de pignon/roue dentée portés par un premier (4) et un deuxième (5) axes fixes ainsi que par un axe de sortie (7). Tous les axes (4,5,7) de ce train d'engrenages sont parallèles entre eux et parallèles à l'axe d'entrée (2).

Le premier axe (4) porte une roue dentée Re1h accouplée à un pignon Pe1h, ces deux éléments tournant autour du premier axe (4). La roue dentée Re1h engrène le pignon d'entrée denté (3), réalisant un premier étage de réduction. Avantageusement, le premier axe (4) est traversant le volume dans lequel s'inscrit l'ensemble statorique (1) bobiné et la roue dentée Re1h est disposée au-dessus de l'ensemble statorique (1) bobiné. Ce premier axe (4) présente aussi une roue dentée Re1b accouplée à un pignon Pe1b, ces deux éléments tournant autour du premier axe (4).

Le deuxième axe (5) porte une roue dentée Re2h accouplée à un pignon Pe2h, ces deux éléments tournant autour du deuxième axe (5), ainsi qu'une roue dentée Re2b accouplée à un pignon Pe2b, ces deux éléments tournant aussi autour du deuxième axe (5). La roue dentée Re2h engrène avec le pignon Pe1h, réalisant un deuxième étage de réduction. La roue dentée Re1b engrène avec le pignon denté Pe2h, réalisant un troisième étage de réduction, la roue dentée Re2b engrène le pignon denté Pe1b, réalisant un quatrième étage de réduction.

L'axe de sortie (7) porte une roue de sortie dentée RDS tournant autour de l'axe de sortie (7) fixe. Un organe de liaison (8) permet d'accoupler la roue de sortie dentée RDS à un organe extérieur quelconque à déplacer (non montré). La roue dentée Re2b engrène avec la roue de sortie dentée RDS. A noter que cette dernière liaison d'engrenages peut aussi bien être selon un rapport de réduction unitaire que non unitaire. Dans le cas d'un rapport unitaire, cette liaison permet avantageusement de bénéficier d'une roue de sortie dentée RDS creuse pouvant plus facilement être connectée à un organe extérieur.

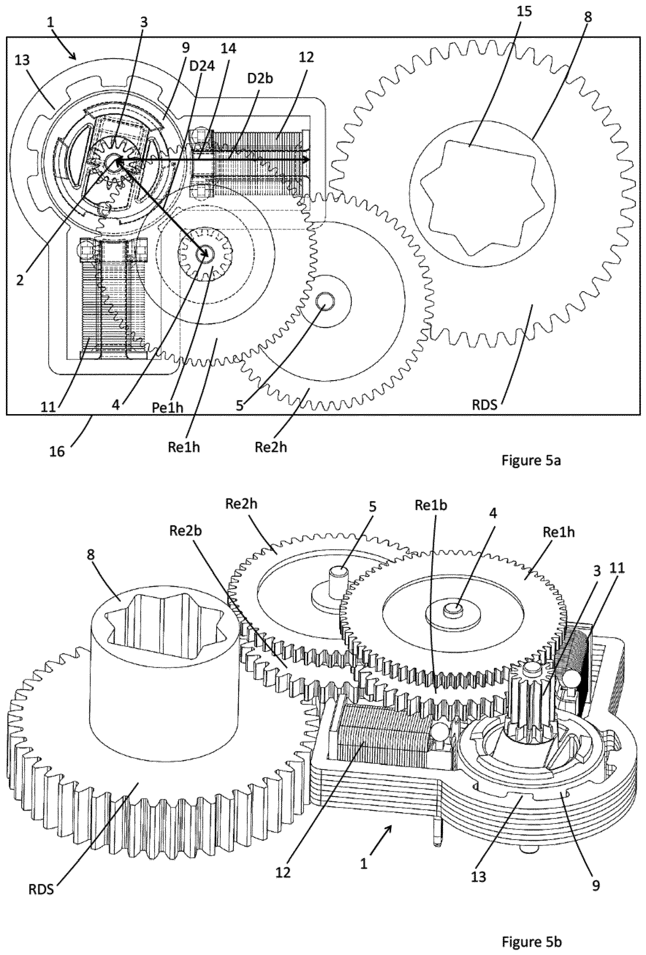

Pour illustrer concrètement un mode de réalisation suivant ce deuxième exemple, les figures 5a et 5b présente la réalisation d'un motoréducteur pris sur l'exemple d'utilisation d'un moteur sans balai diphasé présentant deux bobines (11) et (12), déphasé mécaniquement et électriquement de 90°.

L'ensemble statorique (1) est composé d'un assemblage de tôles de matériaux ferromagnétique doux, par exemple en fer-silicium et de deux bobines électriques (11) et (12) qui sont portées par des pôles, par exemple (14), de l'ensemble statorique (1) et dont les axes de bobinage sont espacés d'approximativement 90° les uns des autres. De cette façon, l'encombrement total du motoréducteur, qui peut s'inscrire dans un boitier (16) dont l'empreinte peut être apprécié en figure 5a, est minimisé car le train d'engrenages réducteur et les pôles bobinés sont du même côté entre l'axe (2) du rotor (9) et la roue de sortie RDS. Le boitier (16) recevant cet ensemble motoréducteur peut dont être d'une taille réduite par rapport à l'art antérieur.

Cet ensemble statorique (1) présente par ailleurs plusieurs pôles non bobinés, par exemple (13), servant à refermer le flux magnétique du circuit formé, et à gérer le couple de détente, comme enseigné par l'état de l'art en la matière. Ce moteur comprend aussi un rotor (9) présentant une bague aimantée, tournant autour de l'axe d'entrée (2).

Le premier axe (4) autour duquel tourne l'ensemble roue dentée Re1h et pignon Pe1h, est placé entre les bobines (11) et (12), en contact avec l'ensemble statorique (1). Le contact n'est pas absolument nécessaire pour l'invention mais la compacité recherchée sera d'autant meilleure que le premier axe (4) est proche de l'ensemble statorique (1). On considère, au sens de l'invention, que le premier axe (4) est entre les bobines (11) et (12) lorsque ces bobines (11,12) sont écartées d'un angle mécanique inférieur ou égal à 180°, ici 90° environ et que la distance D24 de l'axe d'entrée (2) au premier axe (4) est inférieure à la distance D2b de l'axe d'entrée (2) à l'extrémité radiale des bobines (11, 12).

On retrouve ensuite l'ensemble des éléments décrits sur la figure 4 jusqu'à la roue de sortie RDS qui présente un organe de liaison (8) ayant une forme permettant l'accouplement à un organe extérieur non montré.

L'organe de liaison est avantageusement creux et traversant de sorte que l'accouplement avec l'organe extérieur à déplacer peut être monté indifféremment d'un côté ou de l'autre du motoréducteur.

La compacité de la solution est donc assurée en premier lieu par l'espacement réduit entre l'axe (2) du rotor (9) et l'organe de liaison (8) en sortie grâce au placement judicieux du premier axe (4) entre les bobines à l'intérieur du volume dans lequel l'ensemble statorique s'inscrit. En deuxième lieu, la compacité est assurée par l'utilisation d'un ensemble de réduction par engrenages qui présentent au moins un axe portant deux ensembles pignon/roue dentée. Le rapport de réduction qu'il est possible d'atteindre dans cet exemple est donc très important, typiquement plus de 1:450, dans un encombrement réduit.

### Troisième exemple de realisation

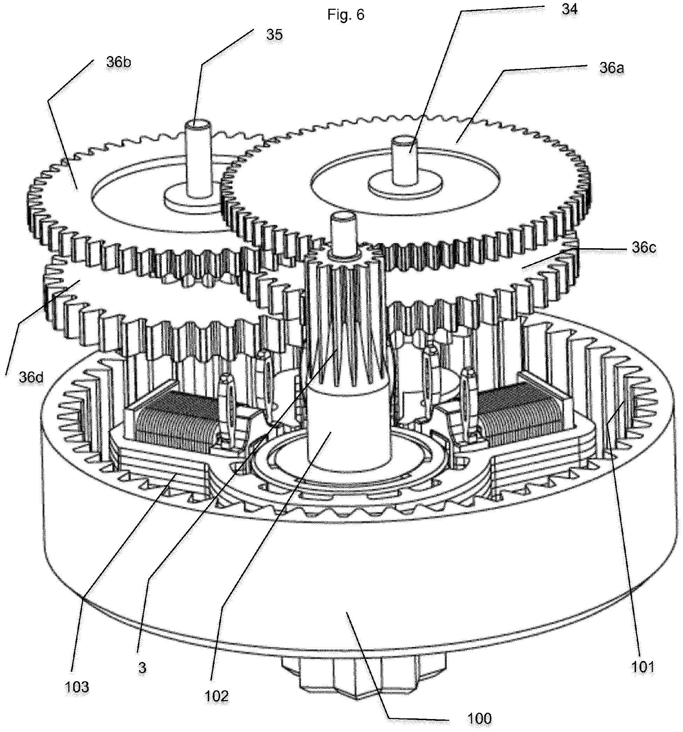

Les figures 6 à 8 illustrent l'intégration suivant la présente invention d'un moteur électrique et d'au moins 4 étages d'engrenages.

Selon cette variante, le moteur électrique (103) est logé à l'intérieur de la roue (100) de forme cylindrique présentant une couronne intérieure (101) dentée.

Le rotor (102) est excentré et entraîne le pignon d'entrée (3) qui est engrené avec la roue dentée (36a), la plus éloignée du moteur électrique (103).

Dans le volume cylindrique intérieur décrit par la roue de sortie (100), la position excentrée du rotor (102) du moteur (103) engrenant sur la roue (101) permet de positionner au moins deux axes de rotation (34) et (35) et de laisser un maximum de surface aux engrenages (36a) à (36d).

Le pignon du mobile (36d) engrène la couronne intérieure (101) qui entoure le moteur électrique (103).

Le dernier étage à denture intérieure, grâce à son cercle primitif plus grand qu'un engrenage intérieur le permettrait, rend possible, mieux qu'un engrenage à denture extérieure, l'association à la fois d'une forte réduction et des dents de module élevé. Ce dernier étage est donc capable de transmettre des couples importants.

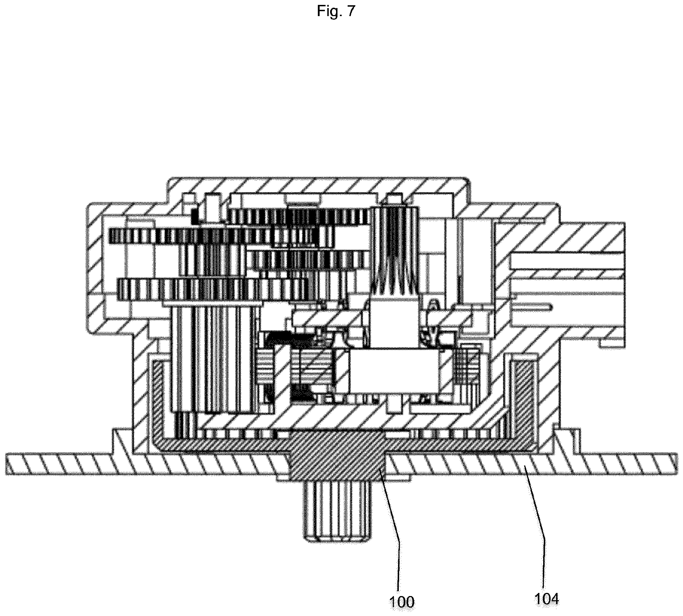

La figure 7 illustre un actionneur suivant l'intégration précédente où la roue de sortie (100) est laissée apparente, ce choix permettant de minimiser le nombre de pièces requises pour construire celui-ci. Cette roue de sortie (100) est libre en rotation et n'est retenue que localement, à l'aide d'ergots ou tout autres moyens, afin d'éviter sa désolidarisation du réducteur. Lors de l'utilisation de l'actionneur, une surface d'accueil (104) externe appartenant au système accueillant l'actionneur, referme le réducteur et garantit son maintien mécanique, voire permet son étanchéité.

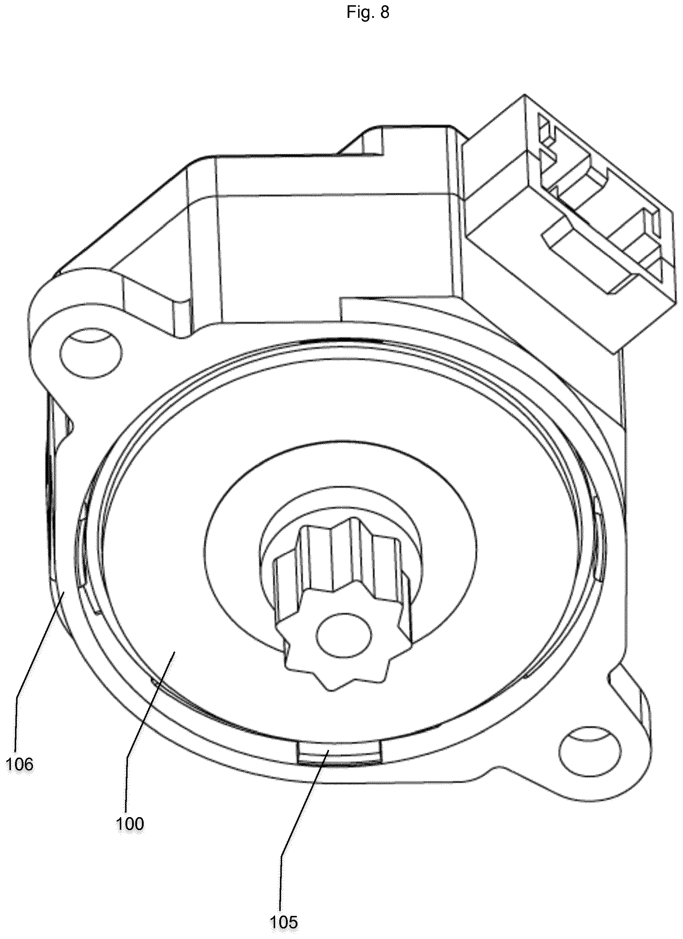

La fermeture du volume englobant la roue de sortie est réalisée directement lors du montage sur l'application, ainsi que son guidage. Ceci est illustré dans la figure 8 présentant une vue en perspective de l'actionneur. Le volume englobant la roue de sortie (100) tournante est rendu clos sans avoir recours à une pièce supplémentaire de l'actionneur. Un clip de maintien (105) est montré, appartenant au boitier (106) de l'actionneur, permet de bloquer axialement la roue de sortie (100).

## Revendications

1. Motoréducteur constitué par un boitier (16) comprenant un moteur sans balai présentant au moins deux phases électriques, un rotor (9) tournant autour d'un axe (2), et composé d'un ensemble statorique (1) présentant au moins deux pôles (14) portant chacun des bobines (11,12) dont les axes de bobinage sont espacés d'un angle mécanique inférieur à 180° et s'étendent radialement, ainsi qu'un train d'engrenages, le train d'engrenages comprenant :
- un premier axe (4) placé dans l'espace angulaire formé entre les deux pôles (14), ledit premier axe (4) portant un premier ensemble formé par un pignon (Pe1) et une roue dentée (Re1) accouplés, la roue dentée (Re1) étant placée au-dessus du pignon (Pe1) et présentant un rayon supérieur au pignon (Pe1), la roue dentée (Re1) engrenant un pignon d'entrée (3) tournant autour de l'axe (2) du rotor (9), la roue dentée (Re1) étant disposée au-dessus desdits pôles (14) portant les bobines (11, 12), tous les axes (4, 5, 6, 7) du train d'engrenages étant parallèles entre eux et parallèles à l'axe (2) du rotor (9) **caractérisé en ce que** le train d'engrenages présente au moins un axe (4, 5) portant deux ensembles roue dentée/pignon tournant autour dudit axe (4, 5), le train d'engrenages comprend au moins quatre étages de réduction, l'axe portant deux ensembles roue dentée / pignon n'est pas l'axe du moteur,
- le train d'engrenages comprend un deuxième axe (5) supportant un deuxième et un troisième ensemble pignon/roue dentée, respectivement supérieur et inférieur, libres en rotation relative,
- ledit deuxième ensemble supérieur est formé par une roue (Re2h) et un pignon (Pe2h),
- ledit troisième ensemble inférieur est formé par une roue (Re2b) et un pignon (Pe2b),
- le train d'engrenages comprend un troisième axe (6) supportant :
- un quatrième ensemble formé par une roue (Re3h) et un pignon (Pe3h) et **en ce que**
- ladite roue (Re2h) dudit deuxième ensemble supérieur engrène avec le pignon (Pe1) dudit premier ensemble,
- ledit pignon (Pe2h) dudit deuxième ensemble supérieur engrène avec ladite roue (Re3h) dudit quatrième ensemble,
- ledit pignon (Pe3h) dudit quatrième ensemble engrène avec la roue (Re2b) dudit troisième ensemble.

2. Motoréducteur constitué par un boitier (16) comprenant un moteur sans balai présentant au moins deux phases électriques, un rotor (9) tournant autour d'un axe (2), et composé d'un ensemble statorique (1) présentant au moins deux pôles (14) portant chacun des bobines (11,12) dont les axes de bobinage sont espacés d'un angle mécanique inférieur à 180° et s'étendent radialement, ainsi qu'un train d'engrenages, le train d'engrenages comprenant :
- un premier axe (4) placé dans l'espace angulaire formé entre les deux pôles (14), ledit premier axe (4) portant un premier ensemble formé par un pignon (Pe1h) et une roue dentée (Re1h) accouplés, la roue dentée (Re1h) étant placée au-dessus du pignon (Pe1h) et présentant un rayon supérieur au pignon (Pe1h), la roue dentée (Re1h) engrenant un pignon d'entrée (3) tournant autour de l'axe (2) du rotor (9), la roue dentée (Re1h) étant disposée au-dessus desdits pôles (14) portant les bobines (11, 12), tous les axes (4, 5, 7) du train d'engrenages étant parallèles entre eux et parallèles à l'axe (2) du rotor (9) **caractérisé en ce que** le train d'engrenages présente au moins un axe (4, 5) portant deux ensembles roue dentée/pignon tournant autour dudit axe (4, 5), le train d'engrenages comprend au moins quatre étages de réduction, l'axe portant deux ensembles roue dentée / pignon n'est pas l'axe du moteur, le premier axe comprend un deuxième ensemble pignon/roue dentée formé par une roue (Re1b) et un pignon (Pe1b),
- le train d'engrenages comprend un deuxième axe (5) supportant :
- un troisième ensemble formé par une roue (Re2h) et un pignon (Pe2h) et un quatrième ensemble formé par une roue (Re2b) et un pignon (Pe2b), et **en ce que**
- ladite roue (Re2h) dudit troisième ensemble engrène avec le pignon (Pe1h) dudit premier ensemble, ledit pignon (Pe2h) dudit troisième ensemble engrène avec ladite roue (Re1b) dudit deuxième ensemble,
- ledit pignon (Pe1b) dudit deuxième ensemble engrène avec la roue (Re2b) dudit quatrième ensemble.

3. Motoréducteur selon la revendication 1 **caractérisé en ce que** le moteur est diphasé et **en ce qu'**il comprend deux bobines (11, 12) dont les axes de bobinage sont espacés d'un angle voisin de 90°.

4. Motoréducteur selon la revendication 1 **caractérisé en ce que** le moteur est triphasé et **en ce qu'**il comprend trois bobines (10, 11, 12) dont les axes de bobinage sont espacés d'un angle voisin de 120°.

5. Motoréducteur selon la revendication 1 **caractérisé en ce que** le moteur est triphasé et **en ce qu'**il comprend trois bobines (10, 11, 12) dont les axes de bobinage sont espacés d'un angle voisin de 60°.

6. Motoréducteur selon la revendication 2 **caractérisé en ce que** ledit pignon (Pe2b) dudit quatrième ensemble entraîne l'axe de sortie (7).

7. Motoréducteur selon la revendication 1 **caractérisé en ce que** ledit troisième axe (6) comprend en outre une roue (Re3b) entraînée par ledit pignon (Pe2b) dudit troisième ensemble, ladite roue (Re3b) entraînant une couronne dentée de sortie (RDS) entourant l'axe de sortie (7).

8. Motoréducteur selon la revendication 6 **caractérisé en ce que** ledit pignon (Pe2b) dudit quatrième ensemble entraîne une couronne dentée de sortie (RDS) entourant l'axe de sortie (7).

9. Motoréducteur selon la revendication 7 ou 8 **caractérisé en ce que** ladite couronne dentée de sortie (RDS) présente une ouverture traversante.

10. Motoréducteur selon l'une quelconque des revendications précédentes **caractérisé en ce que** chacun desdites ensembles roue dentée/pignon comprend une roue placée au-dessus du pignon.

11. Motoréducteur selon l'une quelconque des revendications précédentes **caractérisé en ce que** le premier axe (4) est placé en contact avec l'ensemble statorique sur son pourtour extérieur.

## Patentansprüche

1. Getriebemotor, bestehend aus einem Gehäuse (16) mit einem bürstenlosen Motor, der mindestens zwei elektrische Phasen aufweist, einem Rotor (9), der sich um eine Achse (2) dreht und aus einer Statorbaugruppe (1) mit mindestens zwei Polen (14) besteht, die jeweils Spulen (11, 12) tragen, deren Wicklungsachsen um einen mechanischen Winkel von weniger als 180° voneinander beabstandet sind und sich radial erstrecken, und einem Getriebezug, wobei der Getriebezug Folgendes umfasst:
- eine erste Achse (4), die in dem zwischen den beiden Polen (14) gebildeten Winkelraum angeordnet ist, wobei die erste Achse (4) eine erste Baugruppe trägt, die aus einem Ritzel (Pe1) und einem Zahnrad (Re1) gebildet ist, die miteinander gekoppelt sind, wobei das Zahnrad (Re1) oberhalb des Ritzels (Pe1) angeordnet ist und einen größeren Radius als das Ritzel (Pe1) aufweist, wobei das Zahnrad (Re1) mit einem Antriebsritzel (3) kämmt, das sich um die Achse (2) des Rotors (9) dreht, wobei das Zahnrad (Re1) oberhalb der Pole (14) angeordnet ist, die die Spulen (11, 12) tragen, wobei alle Achsen (4, 5, 6, 7) des Getriebezugs parallel zueinander und parallel zur Achse (2) des Rotors (9) sind, **dadurch gekennzeichnet, dass** der Getriebezug mindestens eine Achse (4, 5) aufweist, die zwei Zahnrad-Ritzel-Baugruppen trägt, die sich um die Achse (4, 5) drehen, wobei der Getriebezug mindestens vier Untersetzungsstufen umfasst, wobei die Achse, die zwei Zahnrad-Ritzel-Baugruppen trägt, nicht die Achse des Motors ist,
- wobei der Getriebezug eine zweite Achse (5) umfasst, die eine zweite und eine dritte Ritzel-Zahnrad-Baugruppe, jeweils oben und unten, frei in relativer Drehung trägt,
- wobei die zweite obere Baugruppe durch ein Rad (Re2h) und ein Ritzel (Pe2h) gebildet ist,
- wobei die dritte untere Baugruppe durch ein Rad (Re2b) und ein Ritzel (Pe2b) gebildet ist,
- wobei der Getriebezug eine dritte Achse (6) umfasst, die Folgendes trägt:
- eine vierte Baugruppe, die durch ein Rad (Re3h) und ein Ritzel (Pe3h) gebildet ist, und dadurch, dass
- das Rad (Re2h) der zweiten oberen Baugruppe mit dem Ritzel (Pe1) der ersten Baugruppe kämmt,
- das Ritzel (Pe2h) der zweiten oberen Baugruppe mit dem Rad (Re3h) der vierten Baugruppe kämmt,
- das Ritzel (Pe3h) der vierten Baugruppe mit dem Rad (Re2b) der dritten Baugruppe kämmt.

2. Getriebemotor, bestehend aus einem Gehäuse (16) mit einem bürstenlosen Motor mit mindestens zwei elektrischen Phasen, einem Rotor (9), der sich um eine Achse (2) dreht und aus einer Statorbaugruppe (1) mit mindestens zwei Polen (14) besteht, die jeweils Spulen (11, 12) tragen, deren Wicklungsachsen um einen mechanischen Winkel von weniger als 180° voneinander beabstandet sind und sich radial erstrecken, sowie einem Getriebezug, wobei der Getriebezug Folgendes umfasst:
- eine erste Achse (4), die in dem zwischen den beiden Polen (14) gebildeten Winkelraum angeordnet ist, wobei die erste Achse (4) eine erste Baugruppe trägt, die aus einem Ritzel (Pe1h) und einem Zahnrad (Re1h) gebildet ist, die miteinander gekoppelt sind, wobei das Zahnrad (Re1h) über dem Ritzel (Pe1h) angeordnet ist und einen größeren Radius als das Ritzel (Pe1h) aufweist, wobei das Zahnrad (Re1h) mit einem Antriebsritzel (3) kämmt, das sich um die Achse (2) des Rotors (9) dreht, wobei das Zahnrad (Re1h) oberhalb der Pole (14) angeordnet ist, die die Spulen (11, 12) tragen, wobei alle Achsen (4, 5, 7) des Getriebezugs parallel zueinander und parallel zur Achse (2) des Rotors (9) sind, **dadurch gekennzeichnet, dass** der Getriebezug mindestens eine Achse (4, 5) umfasst, die zwei Zahnrad-Ritzel-Baugruppen trägt, die sich um die Achse (4, 5) drehen, wobei der Getriebezug mindestens vier Untersetzungsstufen umfasst, wobei die Achse, die zwei Zahnrad-Ritzel-Baugruppen trägt, nicht die Motorachse ist, wobei die erste Achse eine zweite Ritzel-Zahnrad-Baugruppe umfasst, die aus einem Rad (Re1b) und einem Ritzel (Pe1b) gebildet ist,
- wobei der Getriebezug eine zweite Achse (5) umfasst, die Folgendes trägt:
- eine dritte Baugruppe, die von einem Rad (Re2h) und einem Ritzel (Pe2h) gebildet ist, und eine vierte Baugruppe, die von einem Rad (Re2b) und einem Ritzel (Pe2b) gebildet ist, und dadurch, dass
- das Rad (Re2h) der dritten Baugruppe mit dem Ritzel (Pe1h) der ersten Baugruppe kämmt, das Ritzel (Pe2h) der dritten Baugruppe mit dem Rad (Re1b) der zweiten Baugruppe kämmt,
- das Ritzel (Pe1b) der zweiten Baugruppe mit dem Rad (Re2b) der vierten Baugruppe kämmt.

3. Getriebemotor nach Anspruch 1, **dadurch gekennzeichnet, dass** der Motor zweiphasig ist und dass er zwei Spulen (11, 12) umfasst, deren Wicklungsachsen um einen Winkel von etwa 90° voneinander beabstandet sind.

4. Getriebemotor nach Anspruch 1, **dadurch gekennzeichnet, dass** der Motor dreiphasig ist und dass er drei Spulen (10, 11, 12) aufweist, deren Wicklungsachsen um einen Winkel von etwa 120° voneinander beabstandet sind.

5. Getriebemotor nach Anspruch 1, **dadurch gekennzeichnet, dass** der Motor dreiphasig ist und dass er drei Spulen (10, 11, 12) aufweist, deren Wicklungsachsen um einen Winkel von etwa 60° voneinander beabstandet sind.

6. Getriebemotor nach Anspruch 2, **dadurch gekennzeichnet, dass** das Ritzel (Pe2b) der vierten Baugruppe die Abtriebsachse (7) antreibt.

7. Getriebemotor nach Anspruch 1, **dadurch gekennzeichnet, dass** die dritte Achse (6) ferner ein Rad (Re3b) umfasst, das durch das Ritzel (Pe2b) der dritten Baugruppe angetrieben wird, wobei das Rad (Re3b) einen Abtriebszahnkranz (RDS) antreibt, der die Abtriebsachse (7) umgibt.

8. Getriebemotor nach Anspruch 6, **dadurch gekennzeichnet, dass** das Ritzel (Pe2b) der vierten Baugruppe einen Abtriebszahnkranz (RDS) antreibt, der die Abtriebsachse (7) umgibt.

9. Getriebemotor nach Anspruch 7 oder 8, **dadurch gekennzeichnet, dass** der Abtriebszahnkranz (RDS) eine Durchgangsöffnung aufweist.

10. Getriebemotor nach einem der vorhergehenden Ansprüche, **dadurch gekennzeichnet, dass** jede der Zahnrad-Ritzel-Baugruppen ein über dem Ritzel angeordnetes Rad umfasst.

11. Getriebemotor nach einem der vorhergehenden Ansprüche, **dadurch gekennzeichnet, dass** die erste Achse (4) an ihrem äußeren Umfang mit der Statorbaugruppe in Kontakt gebracht wird.

## Claims

1. A gear motor consisting of a casing (16) comprising a brushless motor having at least two electrical phases and a rotor (9) rotating around a shaft (2) and being composed of a stator assembly (1) having at least two poles (14) each bearing coils (11,12), the winding axes of which are spaced apart by a mechanical angle of less than 180° and extend radially, and of a gear train, the gear train comprising:
- a first shaft (4) placed in the angular space formed between the two poles (14), said first shaft (4) bearing a first assembly formed by a pinion (Pe1) and a toothed wheel (Re1) that are coupled, the toothed wheel (Re1) being placed above the pinion (Pe1) and having a radius greater than the pinion (Pe1), the toothed wheel (Re1) meshing with an input pinion (3) rotating around the shaft (2) of the rotor (9), the toothed wheel (Re1) being arranged above said poles (14) bearing the coils (11, 12), all the shafts (4, 5, 6, 7) of the gear train being parallel to one another and parallel to the shaft (2) of the rotor (9), **characterized in that** the gear train has at least one shaft (4, 5) bearing two toothed wheel/pinion assemblies rotating around said shaft (4, 5), the gear train comprises at least four reduction stages, the shaft bearing two toothed wheel/pinion assemblies is not the motor shaft,
- the gear train comprises a second shaft (5) supporting a second and a third pinion/toothed wheel assembly, namely an upper assembly and a lower assembly, respectively, that are free in relative rotation,
- said second upper assembly is formed by a wheel (Re2h) and a pinion (Pe2h),
- said third lower assembly is formed by a wheel (Re2b) and a pinion (Pe2b),
- the gear train comprises a third shaft (6) supporting:
- a fourth assembly formed by a wheel (Re3h) and a pinion (Pe3h), and **in that**
- said wheel (Re2h) of said second upper assembly meshes with the pinion (Pe1) of said first assembly,
- said pinion (Pe2h) of said second upper assembly meshes with said wheel (Re3h) of said fourth assembly,
- said pinion (Pe3h) of said fourth assembly meshes with the wheel (Re2b) of said third assembly.

2. A gear motor consisting of a casing (16) comprising a brushless motor having at least two electrical phases and a rotor (9) rotating around a shaft (2) and being composed of a stator assembly (1) having at least two poles (14) each bearing coils (11, 12), the winding axes of which are spaced apart by a mechanical angle of less than 180° and extend radially, and of a gear train, the gear train comprising:
- a first shaft (4) placed in the angular space formed between the two poles (14), said first shaft (4) bearing a first assembly formed by a pinion (Pe1h) and a toothed wheel (Re1h) that are coupled, the toothed wheel (Re1h) being placed above the pinion (Pe1h) and having a radius greater than the pinion (Pe1h), the toothed wheel (Re1h) meshing with an input pinion (3) rotating around the shaft (2) of the rotor (9), the toothed wheel (Re1h) being arranged above said poles (14) bearing the coils (11, 12), all the shafts (4, 5, 7) of the gear train being parallel to one another and parallel to the shaft (2) of the rotor (9), **characterized in that** the gear train has at least one shaft (4, 5) bearing two toothed wheel/pinion assemblies rotating around said shaft (4, 5), the gear train comprises at least four reduction stages, the shaft bearing two toothed wheel/pinion assemblies is not the motor shaft, the first shaft comprises a second pinion/toothed wheel assembly formed by a wheel (Re1b) and a pinion (Pe1b),
- the gear train comprises a second shaft (5) supporting:
- a third assembly formed by a wheel (Re2h) and a pinion (Pe2h) and a fourth assembly formed by a wheel (Re2b) and a pinion (Pe2b), and **in that**
- said wheel (Re2h) of said third assembly meshes with the pinion (Pe1h) of said first assembly, said pinion (Pe2h) of said third assembly meshes with said wheel (Re1b) of said second assembly,
- said pinion (Pe1b) of said second assembly meshes with the wheel (Re2b) of said fourth assembly.

3. The gear motor according to claim 1, **characterized in that** the motor is a two-phase motor, and **in that** it comprises two coils (11, 12), the winding axes of which are spaced apart by an angle close to 90°.

4. The gear motor according to claim 1, **characterized in that** the motor is a three-phase motor, and **in that** it comprises three coils (10, 11, 12), the winding axes of which are spaced apart by an angle close to 120°.

5. The gear motor according to claim 1, **characterized in that** the motor is a three-phase motor, and **in that** it comprises three coils (10, 11, 12), the winding axes of which are spaced apart by an angle close to 60°.

6. The gear motor according to claim 2, **characterized in that** said pinion (Pe2b) of said fourth assembly drives the output shaft (7).

7. The gear motor according to claim 1, **characterized in that** said third shaft (6) further comprises a wheel (Re3b) driven by said pinion (Pe2b) of said third assembly, said wheel (Re3b) driving an output ring gear (RDS) surrounding the output shaft (7).

8. The gear motor according to claim 6, **characterized in that** said pinion (Pe2b) of said fourth assembly drives an output ring gear (RDS) surrounding the output shaft (7).

9. The gear motor according to claim 7 or 8, **characterized in that** said output ring gear (RDS) has a through-opening.

10. The gear motor according to any one of the preceding claims, **characterized in that** each of said toothed wheel/pinion assemblies comprises a wheel placed above the pinion.

11. The gear motor according to any one of the preceding claims, **characterized in that** the first shaft (4) is placed in contact with the stator assembly on its outer circumference.
